# EUROPÄISCHE PATENTANMELDUNG

(11) **EP 4 471 914 A2**
(43) Veröffentlichungstag der Anmeldung: **04.12.2024**
(21) Anmeldenummer: 24172313.9
(22) Anmeldetag: 25.04.2024
(51) Int. Cl.: H01M 8/04089, H01M 8/04119, H01M 8/10

(54) **BRENNSTOFFZELLENSYSTEM UND VERFAHREN ZUM BETREIBEN EINES BRENNSTOFFZELLENSYSTEMS**

(30) Priorität: 30.05.2023 DE 102023114076
(71) Anmelder: Purem GmbH, 66539 Neunkirchen (DE)
(72) Erfinder: Gaiser, Gerd, Reutlingen (DE)
(74) Vertreter: Ruttensperger Lachnit Trossin Gomoll

(57) **Zusammenfassung**

Ein Brennstoffzellensystem, insbesondere für ein Fahrzeug, umfasst wenigstens eine Brennstoffzelle (12), einen an einem Anoden-Einlassbereich (18) der wenigstens einen Brennstoffzelle (12) mit Wasserstoff (H₂) zu speisenden Anodenbereich (14), einen über eine Kathoden-Einlassleitung (19) an einem Kathoden-Einlassbereich (20) der wenigstens einen Brennstoffzelle (12) mit Sauerstoff (O₂) zu speisenden Kathodenbereich (16), eine Kathodengas-Förderanordnung (22) zum Fördern von Kathodengas (L) in die Kathoden-Einlassleitung (19), eine an einem Anoden-Auslassbereich (30) der wenigstens einen Brennstoffzelle (12) Anodenabgas (A) aufnehmende Anoden-Auslassleitung (32), wenigstens eine von dem Anodenabgas (A) durchströmbare Katalysatoreinheit (34) in der Anoden-Auslassleitung (32), eine an einem Kathoden-Auslassbereich (26) der wenigstens einen Brennstoffzelle (12) Kathodenabgas (K) aufnehmende Kathoden-Auslassleitung (28) sowie eine die Kathoden-Einlassleitung (19) mit der Anoden-Auslassleitung (32) stromaufwärts wenigstens einer Katalysatoreinheit (34) verbindende Kathoden-Abzweigleitung (36).

## Beschreibung

Die vorliegende Erfindung betrifft ein Brennstoffzellensystem, welches beispielsweise in einem elektrisch betriebenen Fahrzeug dazu genutzt werden kann, die zum Betreiben des Fahrzeugs erforderliche elektrische Energie zu generieren.

Bei derartigen eine oder mehrere beispielsweise als PEM-Brennstoffzellen ausgebildete Brennstoffzellen aufweisenden Brennstoffzellensystemen werden zum Teil am Beginn des Brennstoffzellenbetriebs, zum Teil auch während des Brennstoffzellenbetriebs so genannte Purge-Vorgänge durchgeführt. Bei diesen Purge-Vorgänge wird der Anodenbereich einer Brennstoffzelle mit an einem Anoden-Einlassbereich in diesen eingeleitetem und an einem Anoden-Auslassbereich aus diesem wieder abgegebenen Wasserstoff gespült, so dass im Anodenbereich sich ansammelnde Luft bzw. Stickstoff aus diesem ausgetragen werden, um dadurch für einen effizienten Brennstoffzellenbetrieb bei nicht beeinträchtigter Wasserstoffkonzentration im Anodenbereich zu sorgen.

Der bei einem derartigen Purge-Vorgang aus dem Anodenbereich mit dem Anodenabgas abgegebene Wasserstoff ist ein grundsätzlich umweltschädliches Gas, und das Abgeben des Wasserstoffs zur Umgebung kann zu einer hinsichtlich einer Explosionsgefahr potenziell kritischen Situation führen.

Es ist die Aufgabe der vorliegenden Erfindung, bei einfacher und kompakter baulicher Ausgestaltung eines Brennstoffzellensystems zuverlässig die Menge von zur Umgebung abgegebenem Wasserstoff zu minimieren.

Gemäß einem ersten Aspekt der vorliegenden Erfindung wird diese Aufgabe gelöst durch ein Brennstoffzellensystem, insbesondere für ein Fahrzeug, umfassend:
- wenigstens eine Brennstoffzelle,
- einen an einem Anoden-Einlassbereich der wenigstens einen Brennstoffzelle mit Wasserstoff zu speisenden Anodenbereich,
- einen über eine Kathoden-Einlassleitung an einem Kathoden-Einlassbereich der wenigstens einen Brennstoffzelle mit Sauerstoff zu speisenden Kathodenbereich,
- eine Kathodengas-Förderanordnung zum Fördern von Kathodengas in die Kathoden-Einlassleitung,
- eine an einem Anoden-Auslassbereich der wenigstens einen Brennstoffzelle Anodenabgas aufnehmende Anoden-Auslassleitung,
- wenigstens eine von dem Anoden-Abgas durchströmbare Katalysatoreinheit in der Anoden-Auslassleitung,
- eine an einem Kathoden-Auslassbereich der wenigstens einen Brennstoffzelle Kathodenabgas aufnehmende Kathoden-Auslassleitung,
- eine die Kathoden-Einlassleitung mit der Anoden-Auslassleitung stromaufwärts wenigstens einer Katalysatoreinheit verbindende Kathoden-Abzweigleitung.

Einen wesentlichen Beitrag zur Reduzierung des zur Umgebung abgegebenen Wasserstoffs liefert die wenigstens eine Katalysatoreinheit, an welcher der insbesondere bei Durchführung von Purge-Vorgängen am Anoden-Auslassbereich abgegebene Wasserstoff in einer katalytischen Reaktion mit Sauerstoff zu Wasser umgesetzt wird. Der für diese katalytische Umsetzung erforderliche Sauerstoff wird dadurch bereitgestellt, dass ein Teil des durch die Kathodengas-Förderanordnung dem Kathoden-Einlassbereich zuzuführenden und Sauerstoff enthaltenden Kathodengases abgezweigt und zusammen mit dem Anodenabgas in die wenigstens eine Katalysatoreinheit bzw., sofern mehrere derartige Katalysatoreinheiten vorgesehen sind, in wenigstens eine der Katalysatoreinheiten eingeleitet wird.

Da bei dem erfindungsgemäß aufgebauten Brennstoffzellensystem ein Teil des einen hohen Sauerstoffgehalt und eine geringe Feuchte bzw. einen geringen Wassergehalt aufweisenden Kathodengases mit dem Anodenabgas durchmischt wird, ist ein vergleichsweise geringer, durch die wenigstens eine Katalysatoreinheit zu leitender Gasvolumenstrom erforderlich, um eine im Wesentlichen vollständige Umsetzung des im Anodenabgas enthaltenen Wasserstoffs mit Luftsauerstoff zu Wasser zu erreichen.. Dies gestattet es, die Katalysatoreinheit mit vergleichsweise kleinem Katalysatorvolumen bzw. einer kleinen Katalysatoroberfläche bereitzustellen, wodurch einerseits die Baugröße und andererseits die Baukosten gering gehalten werden können. Weiter wird ein zu einem relativ hohen Druckverlust führender übermäßig großer Massenstrom durch die wenigstens eine Katalysatoreinheit hindurch vermieden.

Wenn die Kathoden-Abzweigleitung stromabwärts der Kathodengas-Förderanordnung von der Kathoden-Einlassleitung abzweigt, wird durch die Kompression in der Kathodengas-Förderanordnung bereits erwärmtes Kathodengas vor Einleitung in den Kathodenbereich abgezweigt und der wenigstens einen Katalysatoreinheit zugeführt. Dadurch wird ein verbessertes Umsetzverhalten der wenigstens einen Katalysatoreinheit bei der katalytischen Umsetzung von Wasserstoff und Sauerstoff zu Wasser erreicht.

Zur definierten Einstellung des Anteils des in die Kathoden-Abzweigleitung geleiteten Teils des Kathodengases wird vorgeschlagen, dass der Kathoden-Abzweigleitung eine Strömungsregulieranordnung zugeordnet ist zum wahlweisen Sperren der Kathoden-Abzweigleitung gegen Durchströmung mit Kathodengas und Freigeben der Kathoden-Abzweigleitung zum Leiten eines Teils des in die Kathoden-Einlassleitung eingeleiteten Kathodengases in die Kathoden-Abzweigleitung.

Dabei kann vorteilhafterweise der Anteil des in die Kathoden-Abzweigleitung eingeleiteten Kathodengases durch die Strömungsregulieranordnung veränderbar sein.

Um im Kathodenbereich der wenigstens einen Brennstoffzelle das Kathodengas mit den für einen effizienten Brennstoffzellenbetrieb erforderlichen bzw. vorteilhaften Wassergehalt bereit stellen zu können, kann in der Kathoden-Einlassleitung stromabwärts einer Abzweigung der Kathoden-Abzweigleitung von der Kathoden-Einlassleitung eine Kathodengas-Befeuchtungsanordnung angeordnet sein. In der Kathodengas-Befeuchtungsanordnung kann dem Kathodengas Wasser bzw. Wasserdampf beigemischt werden. Da diese Beimischung von Wasser bzw. Wasserdampf Strom stromabwärts der Abzweigung des zu der wenigstens einen Katalysatoreinheit zu leitenden Teils des Kathodengases erfolgt, hat der mit dem Anodenabgas zu vermischen Teil des Kathodengases nur einen vergleichsweise geringen Wassergehalt, was wiederum dazu führt, dass auch das in die wenigstens eine Katalysatoreinheit eingeleitete Gemisch aus Anodenabgas und Kathodengas eine vergleichsweise geringe Feuchte bzw. einen vergleichsweise geringen Wassergehalt aufweist. Dies wirkt sich auf das Umsetzverhalten der Katalysatoreinheit bei Durchführung der katalytischen Reaktion vorteilhaft aus und verhindert ein übermäßig schnelles Altern insbesondere des katalytisch wirksamen Materials.

Bei dem erfindungsgemäß aufgebauten Brennstoffzellensystem kann eine Brennstoffzellen-Abgasanlage vorgesehen sein zur Aufnahme des Kathodenabgases und des aus der wenigstens einen Katalysatoreinheit nach Durchführung der katalytischen Reaktion abgegebenen Gemisches des Anodenabgases mit dem aus der Kathoden-Einlassleitung abgezweigten Teil des Kathodengases.

Beispielsweise kann die Brennstoffzellen-Abgasanlage eine Entfeuchtungsanordnung umfassen, um dem Brennstoffzellenabgas vor Abgabe zur Umgebung weitere Feuchtigkeit bzw. Wasser zu entziehen. Alternativ oder zusätzlich kann die Brennstoffzellen-Abgasanlage einen Schalldämpfer umfassen, um die Abgabe von Geräuschen, die beispielsweise im Bereich eines Luft in den Kathodenbereich fördernden Kompressors entstehen können, zur Umgebung zu unterdrücken.

Ein alternativ ausgestaltetes, erfindungsgemäßes Brennstoffzellensystem, insbesondere für ein Fahrzeug, umfasst:
- wenigstens eine Brennstoffzelle,
- einen an einem Anoden-Einlassbereich der wenigstens einen Brennstoffzelle mit Wasserstoff zu speisenden Anodenbereich,
- einen über eine Kathoden-Einlassleitung an einem Kathoden-Einlassbereich der wenigstens einen Brennstoffzelle mit Sauerstoff zu speisenden Kathodenbereich,
- eine Kathodengas-Förderanordnung zum Fördern von Kathodengas in die Kathoden-Einlassleitung,
- eine an einem Anoden-Auslassbereich der wenigstens einen Brennstoffzelle Anodenabgas aufnehmende Anoden-Auslassleitung,
- wenigstens eine von dem Anoden-Abgas durchströmbare Katalysatoreinheit in der Anoden-Auslassleitung,
- eine an einem Kathoden-Auslassbereich der wenigstens einen Brennstoffzelle Kathodenabgas aufnehmende Kathoden-Auslassleitung,
- eine Luft-Einlassleitung zum Einleiten von durch ein Gebläse geförderter Luft als Mischgas in die Anoden-Auslassleitung stromaufwärts wenigstens einer Katalysatoreinheit.

Bei dieser Ausgestaltungsart eines Brennstoffzellensystems wird nicht ein Teil der durch die Kathodengas-Förderanordnung als Kathodengas geförderten Luft abgezweigt und in Richtung zur wenigstens einen Katalysatoreinheit geleitet, sondern es wird beispielsweise von außen zugeführte, externe Luft, die grundsätzlich nicht in den Brennstoffzellenprozess einzuspeisen ist, als Mischgas genutzt und stromaufwärts der wenigstens einen Katalysatoreinheit dem Anodenabgas beigemischt. Damit können grundsätzlich die gleichen Vorteile, wie sie vorangehend erläutert wurden erreicht werden.

Es ist darauf hinzuweisen, dass auch bei diesem Brennstoffzellensystem alle vorangehend mit Bezug auf das erstgenannte Brennstoffzellensystem erläuterten vorteilhaften Weitergestaltungen einzelnen oder in Kombination vorgesehen sein können.

Gemäß einem weiteren Aspekt der vorliegenden Erfindung wird die Aufgabe gelöst durch ein Verfahren zum Betreiben eines Brennstoffzellensystems, insbesondere eines erfindungsgemäß aufgebauten Brennstoffzellensystems, wobei an einem Anoden-Auslassbereich einer Brennstoffzelle abgegebenes Anodenabgas zum Verringern des Wasserstoffgehalts in dem Anodenabgas durch wenigstens eine Katalysatoreinheit geleitet wird und ein Teil von einem Kathoden-Einlassbereich einer Brennstoffzelle zugeführtem Kathodengas oder Luft als Mischgas dem Anodenabgas stromaufwärts wenigstens einer Katalysatoreinheit beigemischt wird.

Zur Anpassung an verschiedene Betriebszustände kann der dem Anodenabgas beigemischte Teil des Kathodengases oder die Menge der dem Anodenabgas beigemengten Luft als Mischgas variabel sein.

Insbesondere kann dabei vorgesehen sein, dass die Menge des dem Anodenabgas beigemischten Kathodengases oder der Luft als Mischgas in Abhängigkeit von dem Wasserstoffgehalt in dem am Anoden-Auslassbereich abgegebenen Anodenabgases eingestellt wird.

Für eine effiziente katalytische Umsetzung bei möglichst klein gehaltenem Volumenstrom durch die wenigstens eine Katalysatoreinheit hindurch wird vorgeschlagen, dass die Menge des dem Anodenabgas beigemischten Kathodengases oder der Luft als Mischgas derart eingestellt wird, dass zur katalytischen Reaktion in der wenigstens einen Katalysatoreinheit ein wenigstens stöchiometrisches, vorzugsweise überstöchiometrisches, Sauerstoff/Wasserstoff-Verhältnis bereitgestellt wird. Insbesondere ein Betrieb der wenigsten seinen Katalysatoreinheit mit einem überstöchiometrischen Sauerstoff/Wasserstoff-Verhältnis stellt sicher, dass im Wesentlichen der gesamte im Anodenabgas enthaltene Wasserstoff zu Wasser umgesetzt werden kann.

Das Auftreten einer hinsichtlich des Auftretens einer Knallgasreaktion im Bereich der wenigstens einen Katalysatoreinheit kritischen Wasserstoffkonzentration in dem durch die wenigstens eine Katalysatoreinheit hindurch geleiteten Gemisch aus Anodenabgas und Kathodengas kann dadurch vermieden werden, die Menge des dem Anodenabgas beigemischten Kathodengases oder der Luft als Mischgas derart eingestellt wird, dass das der wenigstens einen Katalysatoreinheit zugeführte Gemisch aus Anodenabgas und Kathodengas einen unter einem Schwellen-Wasserstoffgehalt liegenden Wasserstoffgehalt aufweist.

Dabei ist es besonders vorteilhaft, wenn der Schwellen-Wasserstoffgehalt im Bereich von 4 Vol.% bis 8 Vol.% liegt und damit ein eine derartige Reaktion zulassendes Zündverhältnis nicht erreicht wird.

Zur weiteren Behandlung der verschiedenen Abgasströme kann die wenigstens eine Brennstoffzelle an einem Kathoden-Auslassbereich verlassendes Kathodenabgas und das die wenigstens eine Katalysatoreinheit nach Durchführung der katalytischen Reaktion des Anodenabgases und des dem Anodenabgas beigemischten Teils des Kathodengases oder der als Mischgas beigemengten Luft verlassende Gemisch in eine Brennstoffzellen-Abgasanlage geleitet werden. In einer derartigen Brennstoffzellen-Abgasanlage kann dem diese durchströmenden Gasgemisch weitere Feuchtigkeit bzw. weiteres Wasser entzogen werden. Auch kann eine derartige Brennstoffzellen-Abgasanlage einen Schalldämpfer umfassen, um die Abgabe von Geräuschen, welche insbesondere im Bereich des Luft in den Kathodenbereich fördernden Kompressors entstehen können, nach außen zu unterdrücken.

Die vorliegende Erfindung wird nachfolgend mit Bezug auf die beiliegenden Figuren detailliert beschrieben. Es zeigt:
- Fig. 1: ein Brennstoffzellensystem in prinzipartiger Darstellung;
- Fig. 2: eine alternative Ausgestaltungsart des Brennstoffzellensystems.

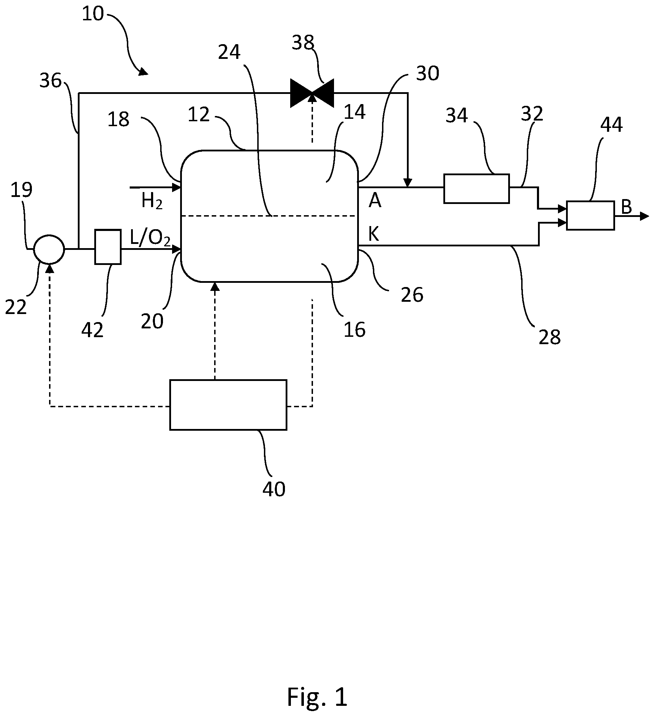

In Fig. 1 ist ein beispielsweise in einem Fahrzeug zur Erzeugung elektrischer Energie eingesetztes Brennstoffzellensystem allgemein mit 10 bezeichnet. Das Brennstoffzellensystem 10 umfasst als zentralen Bestandteil eine beispielsweise als PEM-Brennstoffzelle ausgebildete Brennstoffzelle 12 bzw. einen Brennstoffzellenstapel mit einem Anodenbereich 14 und einem Kathodenbereich 16.

Dem Anodenbereich 14 wird an einem Anoden-Einlassbereich 18 gasförmiger Wasserstoff H₂ beispielsweise aus einem Kryo-Wasserstofftank zugeführt. Über eine Kathoden-Einlassleitung 19 wird an einem Kathoden-Einlassbereich 20 vermittels einer beispielsweise als Kompressor ausgebildeten Kathodengas-Förderanordnung 22 dem Kathodenbereich 16 als Kathodengas Luft L und damit in der Luft enthaltener Sauerstoff O₂ zugeführt. Im Brennstoffzellenbetrieb der Brennstoffzelle 12 diffundieren Wasserstoffprotonen durch die Membran 24 der Brennstoffzelle 12 in den Kathodenbereich 16 und reagieren dort mit dem in diesen eingeleiteten Sauerstoff zu Wasser, das zusammen mit Restsauerstoff und in der dem Kathodenbereich 16 zugeführten Luft L enthaltenem Stickstoff an einem Kathoden-Auslassbereich 26 in eine Kathoden-Auslassleitung 28 abgegeben wird.

Um bei nicht aktivierter Brennstoffzelle 12 in dem Anodenbereich 14 sich ansammelnde Luft, also im Wesentlichen Sauerstoff und Stickstoff, aus dem Anodenbereich 14 zu entfernen bzw. während des Brennstoffzellenbetriebs durch Diffusion durch die Membran 24 hindurch sich in dem Anodenbereich 14 ansammelnden Stickstoff aus dem Anodenbereich 14 auszutragen, werden beispielsweise vor Inbetriebnahme der Brennstoffzelle 12 bzw. während des Brennstoffzellenbetriebs so genannte Purge-Vorgänge durchgeführt, in welchen ein Anoden-Auslassbereich 30 geöffnet wird und durch in den Anodenbereich 14 eingeleiteten Wasserstoff der Anodenbereich 14 gespült wird bzw. darin sich ansammelnder Stickstoff bzw. Sauerstoff aus dem Anodenbereich 14 über den Anodenauslassbereich 30 in eine Anoden-Auslassleitung 32 geleitet wird.

Das insbesondere bei derartigen Purge-Vorgängen in der Anoden-Auslassleitung 32 abgegebene Anodenabgas A enthält Wasserstoff, dessen Abgabe zur Umgebung grundsätzlich unerwünscht ist. Aus diesem Grunde ist in der Anoden-Auslassleitung 32 eine Katalysatoreinheit 34 angeordnet, in welcher in einer Katalytischen Reaktion der im Anodenabgas A enthaltene Wasserstoff mit Sauerstoff zu Wasserumgesetzt wird.

Um die für diese katalytische Reaktion erforderliche Sauerstoffmenge bereitstellen zu können, zweigt von der Kathoden-Einlassleitung 19 stromabwärts des Kompressors 22 eine Kathoden-Abzweigleitung 36 ab. Die Kathoden-Abzweigleitung 36 mündet stromaufwärts der Katalysatoreinheit 34 in die Anoden-Auslassleitung 32 ein. In der Kathoden-Abzweigleitung 36 ist eine als Ventil oder Strömungsklappe oder dergleichen ausgebildete Strömungsleitanordnung 36 vorgesehen. Über die Kathoden-Abzweigleitung 36 und die Strömungsregulieranordnung 38 kann ein Teil des vom Kompressor 22 in die Kathoden-Einlassleitung 19 geförderten Kathodengases L geleitet werden und über diese in die Anoden-Auslassleitung 32 eingeleitet und mit dem am Anoden-Auslassbereich 30 abgegebenen Anodenabgas A stromaufwärts der Katalysatoreinheit 34 vermischt werden.

Zur definierten Einstellung der über die Kathoden-Abzweigleitung 38 in die Anoden-Auslassleitung 32 und damit auch in die Katalysatoreinheit 34 geleiteten Menge des Kathodengases L steht die Strömungsregulieranordnung 38 unter der Ansteuerung einer Ansteuereinheit 40, welche auch dazu genutzt werden kann, die Brennstoffzelle 12 an sich bzw. den Kompressor 22 anzusteuern.

In der Kathoden-Einlassleitung 19 ist stromabwärts des Kompressors 22 und insbesondere auch stromabwärts der Abzweigung der Kathoden-Abzweigleitung 36 von der Kathoden-Einlassleitung 19 eine Kathodengas-Befeuchtungsanordnung 42 vorgesehen. Vermittels der Kathodengas-Befeuchtungsanordnung 42 kann dem am Kathoden-Einlassbereich 20 in den Kathodenbereich 16 eingeleiteten Teil des Kathodengases L Wasser bzw. Wasserdampf beigemengt werden, welcher für den in der Brennstoffzelle 12 durchzuführenden Brennstoffzellenprozess vorteilhaft bzw. erforderlich ist.

Soll ein Purge-Vorgang durchgeführt werden, kann bei beispielsweise unverändertem Betrieb des Kompressors 22 und damit unveränderter Menge der als Kathodengas L in den Kathodenbereich 16 eingeleiteten Luft ein nicht dargestelltes und dem Anoden-Auslassbereich 30 zugeordnetes Ventil angesteuert werden, um dieses zu öffnen und das Anodenabgas A in die Anoden-Auslassleitung 32 strömen zu lassen. Zeitlich abgestimmt auf das Einleiten des Wasserstoff enthaltenden Anodenabgases A in die Anoden-Auslassleitung 32 kann die Strömungsregulieranordnung 38 so angesteuert werden, dass eine geeignete Menge des Kathodengases L aus der Kathoden-Einlassleitung 19 abgezweigt und in die Anoden-Auslassleitung 32 eingeleitet wird.

Um zu gewährleisten, dass zu keinem Zeitpunkt eine zu geringe Menge an Sauerstoff für die Durchführung der katalytischen Reaktion in der Katalysatoreinheit 34 vorhanden ist, kann beispielsweise vorgesehen sein, dass durch die Strömungsregulieranordnung 38 bereits vor dem Leiten von Wasserstoff enthaltendem Anodenabgas A in die Anoden-Auslassleitung 32 ein Teil des Kathodengases L über die Kathoden-Abzweigleitung 36 in die Anoden-Auslassleitung 32 und somit in die Katalysatoreinheit 34 eingespeist wird. Mit im Purge-Vorgang dann zunehmender Menge des aus dem Anodenbereich 14 abgegebenen Wasserstoffs stellt sich in der Katalysatoreinheit 34 ein Sauerstoff/Wasserstoff-Gemisch ein, welches für eine vollständige Umsetzung des Wasserstoffs geeignet ist. Da im Allgemeinen auch bekannt ist, wie groß die Menge bzw. die Konzentration des Wasserstoffs im Anodenabgas A ist, kann durch entsprechende Ansteuerung der Strömungsregulieranordnung 38 auch dafür gesorgt werden, dass die für die Einstellung eines definierten Verhältnisses von Wasserstoff zu Sauerstoff geeignete Menge an Kathodengas L aus der Kathoden-Einlassleitung 19 abgezweigt wird.

Bei der Durchführung der katalytischen Reaktion in der Katalysatoreinheit 34 ist es einerseits von Bedeutung, dass im Wesentlichen kein nicht mit Sauerstoff zu Wasser umgesetzter Wasserstoff die Katalysatoreinheit 34 verlässt. Dies bedeutet, dass das Sauerstoff/Wasserstoff-Verhältnis zumindest stöchiometrisch sein muss. Um das Austreten von nicht umgesetztem Wasserstoff zuverlässig zu verhindern, ist vorzugsweise das Sauerstoff/Wasserstoff-Verhältnis überstöchiometrisch, so dass die Umsetzung unter Sauerstoffüberschuss ablaufen kann.

Weiter muss berücksichtigt werden, dass in dem Gemisch aus Anodenabgas A und Kathodengas L, welches der Katalysatoreinheit 34 zugeführt wird, der Volumenprozentanteil des Wasserstoffs so gering ist, dass ein die Gefahr einer Knallgasexplosion mit sich bringendes Zündverhältnis nicht erreicht wird. Aus diesem Grund ist es vorteilhaft, wenn die vom Kathodengas L abgezweigte Menge des Kathodengases L so eingestellt wird, dass unter Berücksichtigung des bei einem Purge-Vorgang zu erwartenden Wasserstoffgehalts im Anodenabgas A in dem dann erzeugten Gemisch aus Anodenabgas A und Kathodenabgas K der Wasserstoffgehalt einen Schwellen-Wasserstoffgehalt im Bereich von 4 Vol.% bis 8 Vol.% nicht übersteigt. Dabei kann insbesondere die dem Anodenabgas A beigemengte Menge des Kathodengases L so bestimmt werden, dass die infolge der Reaktionswärme bei ablaufender katalytischen Reaktion in der Katalysatoreinheit entstehende Temperatur in einem diese Reaktion unterstützenden optimalen Bereich liegt.

Das die Katalysatoreinheit 34 verlassende und idealerweise nahezu keinen Wasserstoff, dafür aber Wasser enthaltende Anodenabgas A kann zusammen mit dem in der Kathoden-Auslassleitung 28 strömenden Kathodenabgas K einer Brennstoffzellen-Abgasanlage 44 zugeführt werden, in welcher beispielsweise dem diese durchströmenden Gemisch aus Anodenabgas A und Kathodenabgas K Wasser entzogen werden kann. Auch kann die Brennstoffzellen-Abgasanlage 42 einen oder mehrere Schalldämpfer enthalten, über welche dann das Brennstoffzellenabgas B im Wesentlichen frei von Wasserstoff und mit nur einem vergleichsweise geringen Wassergehalt zur Umgebung ausgestoßen werden kann.

Mit dem erfindungsgemäßen Brennstoffzellensystem ist bei konstruktiv einfacher Ausgestaltung zuverlässig dafür gesorgt, dass insbesondere während Purge-Vorgängen aus dem Anodenbereich einer bzw. mehrerer Brennstoffzellen ausgestoßener Wasserstoff zuverlässig in einer katalytischen Reaktion mit Sauerstoff zu Wasser umgesetzt werden kann. Da das Anodenabgas nur mit einem Teil des dem Kathoden-Einlassbereich zuzuführenden Kathodengases durchmischt wird, ist der die Katalysatoreinheit durchsetzende Volumenstrom vergleichsweise klein, was auch zu einem kleineren und somit preisgünstigeren Aufbau der Katalysatoreinheit beiträgt.

Besonders vorteilhaft wirkt sich auf den Betrieb der Katalysatoreinheit aus, dass der dieser zugeführte Teil des Kathodengases durch den Verdichtungsprozess im Kompressor komprimiert wird und dabei erwärmt wird, so dass ein gleichermaßen erwärmtes Gemisch aus Kathodengas bzw. Luft und Anodenabgas in die Katalysatoreinheit eingeleitet wird. Die dadurch auch erhöhte Temperatur im Bereich der Katalysatoreinheit unterstützt die katalytische Umsetzung von Wasserstoff und Sauerstoff zu Wasser. Durch das Abzweigen des der Katalysatoreinheit zuzuführenden Teils des Kathodengases stromaufwärts der Kathodengas-Befeuchtungsanordnung ist ferner dafür gesorgt, dass das der Katalysatoreinheit zugeführte Gemisch aus Anodenabgas und Kathodengas eine vergleichsweise geringe Feuchte bzw. einen vergleichsweise geringen Wassergehalt aufweist, was die hydrothermale Alterung der Katalysatoreinheit bzw. des katalytisch wirksamen Materials derselben verringert und den Prozess der katalytischen Umsetzung von Wasserstoff und Sauerstoff zu Wasser begünstigt. Da überdies eine ausreichend hohe Konzentration von Wasserstoff für die Katalytische Umsetzung bereitgestellt werden kann, führt dies zu einer größeren adiabaten Temperaturerhöhung und somit einer höheren Reaktionsgeschwindigkeit, wodurch die Effizienz der Katalysatoreinheit gesteigert werden kann.

Durch die zeitliche Abstimmung der Zufuhr von Anodenabgas und Kathodengas zu der Katalysatoreinheit ist es möglich, dafür zu sorgen, dass vor, während und nach der Durchführung von Purge-Vorgängen im Wesentlichen kein Wasserstoff zur Umgebung abgegeben wird. Hierzu kann bereits vor dem Öffnen des Anoden-Auslassbereichs bei der Durchführung eines Purge-Vorgangs Kathodengas in die Anoden-Abgasleitung eingeleitet werden, auch um die Katalysatoreinheit durch das erwärmte Kathodengas thermisch zu konditionieren. Nach dem Beenden des Purge-Vorgangs kann die Einleitung von Kathodengas zunächst noch kurzzeitig fortgesetzt werden, was vor allem auch das Austragen von in der Katalysatoreinheit sich möglicherweise ansammelndem Wasser unterstützt und somit auch zum Vermeiden einer übermäßigen hydrothermal induzierten Alterung der Katalysatoreinheit beiträgt. Da vorteilhafterweise zwischen den Purge-Vorgängen kein Kathodengas in die Anoden-Abgasleitung eingespeist wird, ist es möglich, die Katalysatoreinheit in diesen Phasen auf einer optimalen Temperatur zu halten. Gleichzeitig wird zwischen den Purge-Vorgängen die Menge des durch die Kathodengas-Förderanordnung zu fördernden Kathodengases verringert bzw. auf die für die Durchführung des Brennstoffzellenprozesses erforderliche Menge beschränkt. Dies gestattet es, eine vergleichsweise klein dimensionierte Kathodengas-Förderanordnung einzusetzen.

Da während der Durchführung eines Purge-Vorgangs, bei welchem im Allgemeinen aufgrund des Öffnens des Anoden-Auslassbereichs der Druck im Anodenbereich absinkt, ein Teil des Kathodengases abgezweigt und nicht in den Kathodenbereich eingeleitet wird, sinkt auch der Druck im Kathodenbereich ab, so dass ohne spezielle Ansteuermaßnahmen bzw. ohne Änderung der Ansteuerung der Kathodengas-Förderanordnung deren Betrieb unverändert fortgesetzt werden kann, gleichzeitig aber eine ungleichmäßige und möglicherweise zu Beschädigungen führende Belastung einer Membran der Brennstoffzelle durch stark unterschiedliche Druckverhältnisse im Anodenbereich und im Kathodenbereich vermieden werden kann.

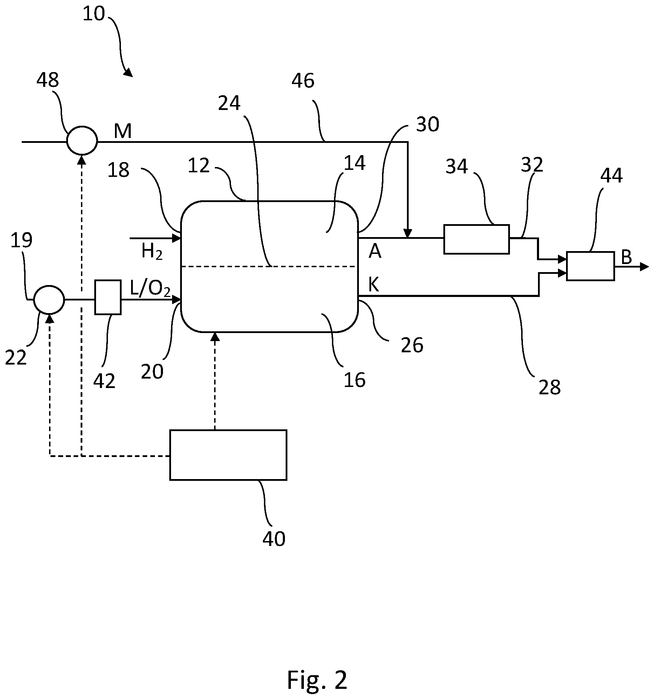

Eine alternative Ausgestaltungsart eines derartigen Brennstoffzellensystems 10 ist in Fig. 2 dargestellt. Dessen Aufbau entspricht im Wesentlichen dem vorangehend mit Bezug auf die Fig. 1 beschriebenen Aufbau, so dass auf diese Ausführungen verwiesen werden kann.

Bei dem Brennstoffzellensystem 10 der Fig. 2 wird dem Anodenabgas A nicht ein Teil der von dem Kompressor 22 als Kathodengas L geförderten Luft beigemischt, um den vorangehend beschriebenen Prozess der katalytischen Umsetzung von im Anodenabgas A enthaltenem Wasserstoff mit Luftsauerstoff zu erreichen. Stattdessen wird durch ein in einer Luftleitung 46 angeordnetes Gebläse 48, welches gleichermaßen unter der Ansteuerung der Ansteuereinheit 40 stehen kann, unabhängig von der Förderung des Kathodengases L zum Kathodenbereich 16 Luft als Mischgas M und damit der darin enthaltene Sauerstoff in den Anodenabgasstrom eingeleitet.

Bei diesem Brennstoffzellensystem 10 kann in der vorangehend mit Bezug auf das Brennstoffzellensystem der Fig. 1 beschriebenen Art und Weise bzw. unter Verwendung der gleichen Ansteuer- bzw. Fördermaßnahmen ebenfalls eine effiziente und den Ausstoß von Wasserstoff zur Umgebung vermeidende katalytische Umsetzung in der Katalysatoreinheit 34 erreicht werden. Da die Einspeisung der Luft stromabwärts des Anodenbereichs 14 erfolgt, existiert nur ein vergleichsweise geringer Gegendruck, so dass auch ein entsprechend klein dimensioniertes Gebläse 48 zum Fördern dieser Luft genutzt werden kann.

## Patentansprüche

1. Brennstoffzellensystem, insbesondere für ein Fahrzeug, umfassend:
- wenigstens eine Brennstoffzelle (12),
- einen an einem Anoden-Einlassbereich (18) der wenigstens einen Brennstoffzelle (12) mit Wasserstoff (H₂) zu speisenden Anodenbereich (14),
- einen über eine Kathoden-Einlassleitung (19) an einem Kathoden-Einlassbereich (20) der wenigstens einen Brennstoffzelle (12) mit Sauerstoff (O₂) zu speisenden Kathodenbereich (16),
- eine Kathodengas-Förderanordnung (22) zum Fördern von Kathodengas (L) in die Kathoden-Einlassleitung (19),
- eine an einem Anoden-Auslassbereich (30) der wenigstens einen Brennstoffzelle (12) Anodenabgas (A) aufnehmende Anoden-Auslassleitung (32),
- wenigstens eine von dem Anodenabgas (A) durchströmbare Katalysatoreinheit (34) in der Anoden-Auslassleitung (32),
- eine an einem Kathoden-Auslassbereich (26) der wenigstens einen Brennstoffzelle (12) Kathodenabgas (K) aufnehmende Kathoden-Auslassleitung (28),
- eine die Kathoden-Einlassleitung (19) mit der Anoden-Auslassleitung (32) stromaufwärts wenigstens einer Katalysatoreinheit (34) verbindende Kathoden-Abzweigleitung (36).

2. Brennstoffzellensystem nach Anspruch 1, **dadurch gekennzeichnet, dass** die Kathoden-Abzweigleitung (36) stromabwärts der Kathodengas-Förderanordnung (22) von der Kathoden-Einlassleitung (19) abzweigt.

3. Brennstoffzellensystem nach Anspruch 1 oder 2, **dadurch gekennzeichnet, dass** der Kathoden-Abzweigleitung (36) eine Strömungsregulieranordnung (38) zugeordnet ist zum wahlweisen Sperren der Kathoden-Abzweigleitung (36) gegen Durchströmung mit Kathodengas (L) und Freigeben der Kathoden-Abzweigleitung (36) zum Leiten eines Teils des in die Kathoden-Einlassleitung (19) eingeleiteten Kathodengases (L) in die Kathoden-Abzweigleitung (38).

4. Brennstoffzellensystem nach Anspruch 3, **dadurch gekennzeichnet, dass** der Anteil des in die Kathoden-Abzweigleitung (36) eingeleiteten Kathodengases (L) durch die Strömungsregulieranordnung (38) veränderbar ist.

5. Brennstoffzellensystem nach einem der Ansprüche 1-4, **dadurch gekennzeichnet, dass** in der Kathoden-Einlassleitung (19) stromabwärts einer Abzweigung der Kathoden-Abzweigleitung (38) von der Kathoden-Einlassleitung (19) eine Kathodengas-Befeuchtungsanordnung (42) angeordnet ist.

6. Brennstoffzellensystem nach einem der Ansprüche 1-5, **dadurch gekennzeichnet, dass** eine Brennstoffzellen-Abgasanlage (44) vorgesehen ist zur Aufnahme des Kathodenabgases (K) und des aus der wenigstens einen Katalysatoreinheit (34) nach Durchführung der katalytischen Reaktion abgegebenen Gemisches des Anodenabgases (A) mit dem aus der Kathoden-Einlassleitung (19) abgezweigten Teil des Kathodengases (G).

7. Brennstoffzellensystem nach Anspruch 6, **dadurch gekennzeichnet, dass** die Brennstoffzellen-Abgasanlage (44) eine Entfeuchtungsanordnung oder/und einen Schalldämpfer umfasst.

8. Brennstoffzellensystem, insbesondere für ein Fahrzeug, umfassend:
- wenigstens eine Brennstoffzelle (12),
- einen an einem Anoden-Einlassbereich (18) der wenigstens einen Brennstoffzelle (12) mit Wasserstoff (H₂) zu speisenden Anodenbereich (14),
- einen über eine Kathoden-Einlassleitung (19) an einem Kathoden-Einlassbereich (20) der wenigstens einen Brennstoffzelle (12) mit Sauerstoff (O₂) zu speisenden Kathodenbereich (16),
- eine Kathodengas-Förderanordnung (22) zum Fördern von Kathodengas (L) in die Kathoden-Einlassleitung (19),
- eine an einem Anoden-Auslassbereich (30) der wenigstens einen Brennstoffzelle (12) Anodenabgas (A) aufnehmende Anoden-Auslassleitung (32),
- wenigstens eine von dem Anodenabgas (A) durchströmbare Katalysatoreinheit (34) in der Anoden-Auslassleitung (32),
- eine an einem Kathoden-Auslassbereich (26) der wenigstens einen Brennstoffzelle (12) Kathodenabgas (K) aufnehmende Kathoden-Auslassleitung (28),
- eine Luft-Einlassleitung (46) zum Einleiten von durch ein Gebläse (48) geförderter Luft als Mischgas (M) in die Anoden-Auslassleitung (32) stromaufwärts wenigstens einer Katalysatoreinheit (34).

9. Verfahren zum Betreiben eines Brennstoffzellensystems, insbesondere eines Brennstoffzellensystems nach einem der Ansprüche 1-8, wobei an einem Anoden-Auslassbereich (30) einer Brennstoffzelle (12) abgegebenes Anodenabgas (A) zum Verringern des Wasserstoffgehalts in dem Anodenabgas (A) durch wenigstens eine Katalysatoreinheit (34) geleitet wird und ein Teil von einem Kathoden-Einlassbereich (20) der Brennstoffzelle (12) zuzuführendem Kathodengas (L) oder Luft als Mischgas (M) dem Anodenabgas (A) stromaufwärts wenigstens einer Katalysatoreinheit (34) beigemischt wird.

10. Verfahren nach Anspruch 9, **dadurch gekennzeichnet, dass** der dem Anodenabgas (A) beigemischte Teil des Kathodengases (L) oder die dem Anodenabgas (A) bei gemengten Menge der Luft als Mischgas (M) variabel ist.

11. Verfahren nach Anspruch 10, **dadurch gekennzeichnet, dass** die Menge des dem Anodenabgas (A) beigemischten Kathodengases (L) oder die Menge der dem Anodenabgas (A) beigemengten Luft als Mischgas (M) in Abhängigkeit von dem Wasserstoffgehalt in dem am Anoden-Auslassbereich (30) abgegebenen Anodenabgas (A) eingestellt wird.

12. Verfahren nach Anspruch 10 oder 11, dass die Menge des dem Anodenabgas (A) beigemischten Kathodengases (L) oder die Menge der dem Anodenabgas (A) bei gemengten Luft als Mischgas (M) derart eingestellt wird, dass zur katalytischen Reaktion in der wenigstens einen Katalysatoreinheit (34) ein wenigstens stöchiometrisches, vorzugsweise überstöchiometrisches, Sauerstoff/Wasserstoff-Verhältnis bereitgestellt wird.

13. Verfahren nach Anspruch 12, **dadurch gekennzeichnet**, die Menge des dem Anodenabgas (A) beigemischten Kathodengases (L) oder die Menge der dem Anodenabgas (A) bei gemengten Luft als Mischgas (M) derart eingestellt wird, dass das der wenigstens einen Katalysatoreinheit (34) zugeführte Gemisch aus Anodenabgas (A) und Kathodengas (L) einen unter einem Schwellen-Wasserstoffgehalt liegenden Wasserstoffgehalt aufweist.

14. Verfahren nach Anspruch 13, **dadurch gekennzeichnet, dass** der Schwellen-Wasserstoffgehalt im Bereich von 4 Vol.% bis 8 Vol.% liegt.

15. Verfahren nach einem der Ansprüche 9-14, **dadurch gekennzeichnet, dass** der die wenigstens eine Brennstoffzelle (12) an einem Kathoden-Auslassbereich (26) verlassendes Kathodenabgas (K) und das die wenigstens eine Katalysatoreinheit (34) nach Durchführung der katalytischen Reaktion des Anodenabgases (A) und des dem Anodenabgas (A) beigemischten Teils des Kathodengases (L) oder der Luft als Mischgas (M) verlassende Gemisch in eine Brennstoffzellen-Abgasanlage (42) geleitet werden.
